(19) Europäisches Patentamt
European Patent Office
Office européen des brevets

(11) EP 4 207 347 A1

(12) EUROPEAN PATENT APPLICATION
published in accordance with Art. 153(4) EPC

(43) Date of publication:
**05.07.2023 Bulletin 2023/27**

(21) Application number: **21861758.7**

(22) Date of filing: **30.08.2021**

(51) International Patent Classification (IPC):
***H01M 4/13*** *(2010.01)* ***H01M 4/62*** *(2006.01)*
***H01M 10/052*** *(2010.01)*

(52) Cooperative Patent Classification (CPC):
**H01M 4/13; H01M 4/62; H01M 10/052;** Y02E 60/10

(86) International application number:
**PCT/JP2021/031764**

(87) International publication number:
**WO 2022/045337 (03.03.2022 Gazette 2022/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.08.2020 JP 2020145196**
**30.11.2020 JP 2020199072**

(71) Applicant: **Panasonic Intellectual Property Management Co., Ltd.**
**Osaka-shi, Osaka 540-6207 (JP)**

(72) Inventors:
- **UCHIDA, Shuhei**
  **Osaka-shi, Osaka 540-6207 (JP)**
- **NAKAYAMA, Takahito**
  **Osaka-shi, Osaka 540-6207 (JP)**

(74) Representative: **Novagraaf International SA**
**Chemin de l'Echo 3**
**1213 Onex, Geneva (CH)**

# (54) SECONDARY BATTERY

(57) The disclosed secondary battery is a non-aqueous electrolyte secondary battery including a positive electrode and a negative electrode. The positive electrode includes a first layer containing a positive electrode active material, and the first layer further contains a flame retardant containing a halogen atom, and carbon nanotubes.

*FIG. 1*

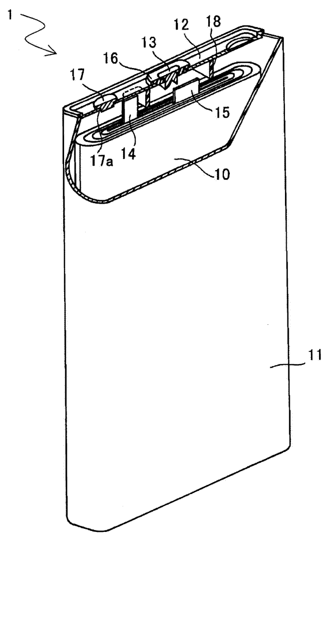


EP 4 207 347 A1

## Description

[Technical Field]

The present disclosure relates to a secondary battery.

[Background Art]

Non-aqueous electrolyte secondary batteries, such as lithium ion secondary batteries, have high output power and high energy density. Because of this, non-aqueous electrolyte secondary batteries have been used as power sources for small consumer application, power storage devices, and electric cars.

Conventionally, various additives have been added to the positive electrode active material layer of a non-aqueous electrolyte secondary battery. For example, Patent Literature 1 discloses "a non-aqueous liquid electrolyte secondary battery including: a positive electrode in which a halogen-substituted cyclic organic compound substituted by one or more chlorine or bromine atoms is added to a positive electrode active material mainly composed of a lithium-transition metal composite oxide containing lithium and at least one of cobalt (Co), nickel (Ni), iron (Fe), manganese (Mn), and copper (Cu); a negative electrode including a compound mainly composed of lithium metal, a lithium alloy, or a material capable of absorbing and releasing lithium; and a non-aqueous liquid electrolyte."

Patent Literature 2 proposes a composite electrode sheet for a lithium ion battery characterized by "including a battery electrode sheet, and a functional coating layer composited on a surface of the battery electrode sheet, wherein the functional coating layer is produced from a functional substance and an adhesive, the functional substance is one or more kinds selected from a phosphorus-containing compound, a nitrogen-containing compound, and an inorganic silicon-based compound, and the battery electrode sheet is a battery positive electrode and/or a battery negative electrode."

[Citation List]

[Patent Literature]

Patent Literature 1: Japanese Laid-Open Patent Publication No. 2010-212228
Patent Literature 2: Japanese Laid-Open Patent Publication No. 2017-534138

[Summary of Invention]

[Technical Problem]

The demand for a higher energy density of non-aqueous electrolyte secondary batteries has been increasing in recent years. However, when increasing the energy density of a lithium-ion secondary battery, the battery safety measures in the event of abnormality is required at a high level.

[Solution to Problem]

One aspect of the present disclosure relates to a secondary battery. The secondary battery is a secondary battery including: a positive electrode; and a negative electrode, wherein the positive electrode includes a first layer containing a positive electrode active material, and the first layer further contains a flame retardant containing a halogen atom, and a carbon nanotube.

[Advantageous Effects of Invention]

According to the present disclosure, a secondary battery with high safety can be realized.

While the novel features of the invention are set forth particularly in the appended claims, the invention, both as to organization and content, will be better understood and appreciated, along with other objects and features thereof, from the following detailed description taken in conjunction with the drawings.

[Brief Description of Drawings]

[FIG. 1] A partially cut-away schematic oblique view of a secondary battery according to one embodiment of the present disclosure.
[FIG. 2] A schematic sectional view showing an exemplary configuration of a positive electrode constituting a secondary battery according to one embodiment of the present disclosure.

[Description of Embodiments]

In the following, examples of embodiments according to the present disclosure will be described. Here, embodiments according to the present disclosure will be described by way of examples, but the present disclosure is not limited to the examples described below. In the following description, specific numerical values and materials are exemplified in some cases, but other numerical values and other materials may be applied as long as the effects of the present disclosure can be obtained. In the present specification, when mentioning "the range of a numerical value Ato a numerical value B", the mentioned range includes the numerical value A and the numerical value B.

(Secondary battery)

A secondary battery according to the present embodiment includes a positive electrode and a negative electrode. The positive electrode includes a first layer containing a positive electrode active material. The first layer contains a flame retardant containing a halogen atom. The first layer can further contain carbon nanotubes. Aflame retardant and a halogen atom are hereinafter sometimes referred to as a "flame retardant (R)" and a "halogen atom (X)", respectively. A secondary battery according to the present embodiment is hereinafter sometimes referred to as a "secondary battery (S)." In one embodiment, the first layer may be a positive electrode active material layer (positive electrode mixture layer) containing a positive electrode active material, a flame retardant (R), and carbon nanotubes serving as a conductive material.

As a result of studies, the present inventors have newly found that, by using a specific flame retardant and carbon nanotubes in combination, a higher capacity and a high level of safety can be both achieved, and a secondary battery excellent also in other characteristics (capacity retention rate in charge-discharge cycles) can be obtained. The present disclosure is based on this new finding.

(Flame retardant (R))

The flame retardant (R) exhibits a flame retardant effect by releasing the halogen atom (X) at high temperatures. Therefore, according to the secondary battery (S), excessive heat generation and catching fire in the event of abnormality can be suppressed.

The flame retardant (R) may satisfy at least one of the following conditions (1) and (2). The flame retardant (R) preferably satisfies both of the following conditions (1) and (2).

(1) The flame retardant (R) includes a cyclic structure to which a halogen atom (X) is bonded. The cyclic structure may or may not be an aromatic ring. In this case, all of the halogen atoms (X) may be bonded to the cyclic structure, or only part of the halogen atoms (X) may be bonded to the cyclic structure. A structure in which a halogen atom (X) is bonded to the cyclic structure is preferable in that the halogen atom content can be easily increased.
(2) The proportion of the halogen atom (X) in the flame retardant (R) is 45 mass% or more. This proportion may be 60 mass% or more (e.g., 70 mass% or more). The upper limit may be any value, and may be 95 mass% or less (e.g., 90 mass% or more). These lower limits and upper limits can be combined in any combination.

The structural formula of ethylene-1 ,2-bispentabromophenyl, which is an example of the flame retardant (R), is shown below. Ethylene-1 ,2-bispentabromophenyl has a molecular weight of 971.2, and contains 10 bromine atoms (atomic weight: 79.9). Therefore, the proportion of the halogen atom (X) in ethylene-1 ,2-bispentabromophenyl is $100 \cdot 10 \cdot 79.9/971.2 = 82.3$ mass%.

[Chem. 1]

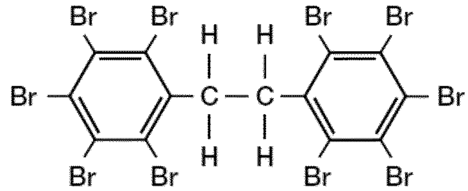

The halogen atom (X) is not limited. Preferable examples of the halogen atom (X) include bromine (Br), chlorine (F), and fluorine (F). From the point that the flame retardant effect can be expected in the early stage of abnormal heat generation, the halogen atom (X) may be bromine and/or chlorine, or may be bromine.

The flame retardant (R) containing such a halogen atom (X) has a higher specific gravity than a conventionally-used phosphorus-based flame retardant. Therefore, the volume thereof can be reduced relative to the added mass. This makes it possible to obtain a sufficient effect of suppressing heat generation, while reducing the thickness of the flame retardant layer. Thus, the thickness of the active material layer is unlikely to be restricted by the flame retardant layer, and a high capacity can be realized by using a thick active material layer. The flame retardant (R) preferably contains bromine (Br) because of its high specific gravity. Moreover, the greater the number of the halogen atoms (X) bonded to the flame retardant (R) is, the better. By containing a halogen atom (X) bonded to the cyclic structure, the specific gravity of the flame retardant (R) can be easily increased. The specific gravity of the flame retardant (R) may be, for example, 2.7 or more, and is preferably 3.0 or more.

The flame retardant (R) preferably does not include a moiety that generates moisture in the structure of the compound and/or a hydrophilic group. In this case, moisture hardly enters the battery during the manufacturing process of the secondary battery, and a highly reliable secondary battery can be realized. Examples of the moiety that generates moisture include a hydroxyl groups (-OH), a carboxyl group (-COOH), a carbonyl group (-CO-), and an oxoacid group, such as sulfo group and phosphoric acid group. Examples of the hydrophilic group include the above-mentioned functional groups, and an amino group.

The flame retardant (R) may release the halogen atom (X) at temperatures of 180 °C or higher (e.g., 250 °C or higher). If the flame retardant releases the halogen atom (X) at relatively low temperatures, the halogen atom (X) could be released under the situation where no abnormality occurs, causing the battery characteristics to deteriorate. Therefore, it is preferable that the flame retardant (R) does not substantially release the halogen atom (X) at temperatures below 180 °C.

The flame retardants (R) may be at least one selected from the group consisting of ethylene-1,2-bispentabromophenyl, ethylenebistetrabromophthalimide, tetrabromobisphenol A, hexabromocyclododecane, 2,4,6-tribromophenol, 1,6,7,8,9,14,15,16,17,17,18,18-dodecachloropentacyclo(12.2.1.1$^{6,9}$.0$^{2,13}$.0$^{5,10}$)octadeca-7,15-diene (trade name: Decloran Plus), and tris(2,2,2-trifluoroethyl) phosphate. For these flame retardants (R), commercially available ones may be used. Alternatively, the flame retardant (R) may be synthesized by a known synthetic method.

When a mass ratio of the positive electrode active material to the flame retardant (R) in the first layer is expressed, as the positive electrode active material: the flame retardant (R) = 100 : a, the a may be greater than 0 and less than 7. With this configuration, it is possible to improve the safety without significantly reducing the battery capacity. The value of the a may be equal to or greater than 0.1, equal to or greater than 0.3, equal to or greater than 0.5, or equal to or greater than 1.0. The value of the a may be less than 7.0, less than 4.5, equal to or less than 3.0, equal to or less than 2.0, equal to or less than 1.5, or equal to or less than 1.0. These lower and upper limits can be combined in any combination as long no contradiction arises. For example, the value of the a may be in the range of equal to or greater than 0.1 and less than 7 (e.g., the range of equal to or greater than 0.1 and less than 4.5, the range of 0.1 to 3.0, the range of 0.1 to 2.0, the range of 0.1 to 1.0, the range of 0.5 to 2.0, the range of 0.5 to 1.0).

The first layer may or may not contain acetylene black. When a mass ratio between the positive electrode active material, the acetylene black, and the carbon nanotubes in the first layer is expressed, as the positive electrode active material: the acetylene black : the carbon nanotubes = 100 : b : c, the b and the c may satisfy $0 \leq b < 5$, and $b+c < 10$. With this configuration, it is possible to achieve a higher capacity and excellent cycle performance. The b and the c may satisfy $0 \leq b < 3$ and $b+c < 5$, and may satisfy $0 \leq b < 1$ and $0.02 < b+c < 5$ (e.g., $0.1 < b+c < 1$). The value of the c may be in the range of 0.02 to 3.0 (e.g., the range of 0.02 to 2.0, the range of 0.05 to 1.0, the range of 0.05 to 0.5, or the range of 0.1 to 0.5). The value of the b may be in the range of 0 to 3.0 (e.g., the range of 0 to 2.0, the range of 0 to 1.0, or the range of 0 to 0.5).

In a preferred example of the secondary battery (S), the above value of the a is in the range of 0.5 to 1.0, the b is in the range of 0 to 0.5, and the c is in the range of 0.02 to 0.5 (e.g., 0.1 to 0.5). The flame retardant (R) in this example may be ethylene-1,2-bispentabromophenyl, and/or, ethylenebistetrabromophthalimide.

(Carbon nanotubes)

The carbon nanotubes form conductive paths between the particles of the positive electrode active material, and function as a conductive material for increasing the conductivity of the positive electrode active material layer containing a positive electrode active material (e.g., the first layer or a later-described second layer). The aspect ratio (ratio of length to diameter) of the carbon nanotubes is very high. Therefore, the carbon nanotubes, even in a small amount, can exert excellent electrical conductivity. Also, by using carbon nanotubes as a conductive material, the proportion of the positive electrode active material in the positive electrode active material layer can be increased. Thus, the secondary battery (S) can have a higher capacity.

The content of the carbon nanotubes in the positive electrode active material layer may be 0.01 mass% or more, 0.1 mass% or more, or 0.3 mass% or more, for reducing the battery resistance. On the other hand, for achieving a higher capacity and suppressing the rise of battery temperature in the event of abnormality, the content of the carbon nanotubes may be 10 mass% or less, 3 mass% or less, or 1 mass% or less, These lower and upper limits can be combined in any combination as long as no contradiction arises.

The proportion of the positive electrode active material contained in the positive electrode active material layer can be determined using a sample obtained by taking out a positive electrode active material layer only, from the secondary battery in a discharged state. Specifically, first, the secondary battery in a discharged state is disassembled, to take out a positive electrode. Next, the positive electrode is washed with an organic solvent, and dried under vacuum, from which only the positive electrode active material layer is peeled off, to obtain a sample. By subjecting the sample to thermal analysis, such as TG-DTA, the contents of the components other than the positive electrode active material, i.e., the binder component and the conductive material component, can be calculated. When two or more kinds of carbon materials are contained in the binder component and the conductive material component, the proportion of the carbon nanotubes occupying them can be calculated by microscopic Raman spectroscopy performed on a cross section of the positive electrode active material layer. The proportion of the flame retardant (R) occupying the positive electrode active material layer can be determined by an elemental analysis, such as EDS, performed on a cross section of the positive electrode active material layer.

The outer diameter and length of the carbon nanotubes can be determined by an image analysis using a scanning electron microscope (SEM). For example, the length can be determined by selecting a plurality of (e.g., 100 to 1000) carbon nanotubes, to measure the length and diameter thereof, and averaging the measured values.

Examples of the carbon nanotubes include carbon nanofibers. For the carbon nanotubes, commercially available ones may be used because they are variously available on the market. Alternatively, the carbon nanotubes may be synthesized by a known synthetic method.

The carbon nanotubes may be single-walled, double-walled, or multi-walled. Preferred is single-walled carbon nanotubes, because great effect can be obtained with a small amount. In the carbon nanotubes having a diameter of 5 nm or less, single-walled carbon nanotubes are much included. The single-walled carbon nanotubes may be 50 mass% or more of the whole carbon nanotubes.

The diameter of the carbon nanotubes is not limited, and may be in the range of 0.001 to 0.05 $\mu$m. The carbon nanotubes may be of any length, but may be 0.5 $\mu$m or more long, in view of ensuring the electron conduction in the positive electrode active material layer. On the other hand, there is no upper limit for the length of the carbon nanotubes as long as they are properly arranged inside the positive electrode. The particle diameter of the positive electrode active material is typically 1 $\mu$m or more and 20 $\mu$m or less. In light of this, the length of the carbon nanotubes may be a length equivalent thereto. That is, the length of the carbon nanotubes may be, for example, 1 $\mu$m or more and 20 $\mu$m or less. For example, when a plurality of (e.g., 100 or more) carbon nanotubes are randomly selected in the positive electrode active material layer, the length of 50% or more (ratio by number) of the selected carbon nanotubes may be 1 $\mu$m or more, and may be 1 $\mu$m or more and 20 $\mu$m or less. The length of 80% or more of the selected carbon nanotubes may be 1 $\mu$m or more, and may be 1 $\mu$m or more and 20 $\mu$m or less.

In one embodiment of the present disclosure, the flame retardant (R) may be localized near the surface of the first layer. In this case, the first layer includes, for example, a second layer containing at least a positive electrode active material and carbon nanotubes, and a third layer disposed nearer to the surface of the positive electrode than the second layer and containing at least a flame retardant (R). The content of the flame retardant in the third layer is greater than that in the second layer. Here, the content of the flame retardant means the number of moles of the flame retardant contained in the unit volume (apparent volume) of the second layer or the third layer, and whether the flame retardant is localized on the second layer side or not can be measured, for example, by performing an elemental analysis, such as EDS, on a cross section of the first layer (the second layer and the third layer), to determine the distribution of the flame retardant in the depth direction. In one embodiment, the second layer is a positive electrode active material layer (positive electrode mixture layer) containing at least a positive electrode active material and carbon nanotubes serving as a conductive material, and the third layer may be a flame retardant layer containing at least a flame retardant (R).

The second layer can further contain carbon nanotubes. By adding carbon nanotubes to the second layer

containing a positive electrode active material, the resistance of the battery is reduced, and the deterioration due to repeated charge and discharge can be suppressed. On the other hand, in a secondary battery in which carbon nanotubes are added to the positive electrode active material layer, the risk of an abnormal phenomenon accompanied by heat generation, such as internal short circuit, tends to be higher than in a secondary battery in which a conductive material, such as acetylene black, is added in the same amount. However, by placing the third layer containing a flame retardant (R) between the separator and the second layer which is a positive electrode active material layer, and by adding carbon nanotubes to the second layer, excellent battery characteristics can be maintained, and the rise of battery temperature in the event of abnormality can be suppressed. In this case, the second layer may not substantially contain the flame retardant (R).

The third layer serving as a flame retardant layer contains a flame retardant (R) containing a halogen atom (X), and exhibits a flame retardant effect by releasing the halogen atom (X) at high temperatures. Therefore, according to the secondary battery (S), excessive heat generation in the event of abnormality can be suppressed. Furthermore, the third layer which is a flame retardant layer has no electronic conductivity. By interposing the third layer between the separator and the second layer which is a positive electrode active material layer, even under the situation where a short circuit is likely to occur inside the battery, the third layer can act as a resistive layer that suppresses the short circuiting. Thus, the heat generation can be effectively suppressed.

A secondary battery in another embodiment of the present disclosure is a secondary battery including a positive electrode and a negative electrode, and the positive electrode includes a first layer containing a positive electrode active material. The first layer contains at least a positive electrode active material and a flame retardant (R) containing a halogen atom (X), and in the first layer, the flame retardant (R) is localized near the surface of the first layer. For example, the first layer includes a second layer containing at least a positive electrode active material and a flame retardant (R), and a third layer disposed nearer to the surface of the positive electrode than the second layer and containing at least the flame retardant (R). The content of the flame retardant in the third layer is greater than that in the second layer. Here, the content of the flame retardant means the number of moles of the flame retardant contained in the unit volume (apparent volume) of the second layer or the third layer, and can be measured by an elemental analysis, such as EDS.

When the content of the flame retardant in the second layer on the current collector side of the positive electrode is set lower than the content of the flame retardant (R) in the third layer on the surface side of the positive electrode, the increase of battery resistance in the second layer is suppressed, and the deterioration due to repeated charge and discharge can be suppressed. Furthermore, the third layer having a high flame-retardant content can suppress the rise of battery temperature in the event of abnormality. Thus, a secondary battery that achieves both excellent battery characteristics and suppression of the rise of battery temperature in the event of abnormality can be easily realized. In this case, it is not essential to add carbon nanotubes to the second layer (and the third layer), and a material commonly used as a conductive material, such as carbon black, may be added thereto. The third layer may contain a positive electrode active material. The mass-based content of the positive electrode active material in the third layer is preferably lower than that in the second layer.

The third layer is preferably disposed on the surface of the second layer containing a positive electrode active material, so as to be in contact with the surface of the second layer and cover at least part of the second layer.

The third layer may contain a binder, in addition to the flame retardant (R). When the third layer contains a binder, the bonding property between the particles of the flame retardant (R) and the bonding property of the flame retardant (R) to the second layer which is a positive electrode active material layer can be enhanced. That is, the third layer can be brought into close contact with the second layer. Examples of the binder include, but is not limited to, polyvinylidene fluoride (PVdF), ethylene dimethacrylate, allyl methacrylate, t-dodecylmercaptan, $\alpha$-methylstyrene dimer, and methacrylic acid. When polyvinylidene fluoride (PVdF), ethylene dimethacrylate, allyl methacrylate, t-dodecylmercaptan, $\alpha$-methylstyrene dimer, or methacrylic acid is used as the binder, the positive electrode can be bonded to the separator by application of pressure and/or heat to the third layer.

The third layer may contain particles other than those of the flame retardant (R) and binder. Examples of the other particles include inorganic particles containing a metal oxide, such as alumina, boehmite, and titania. The inorganic particles containing a metal oxide function as a spacer, and the adding amount of the flame retardant can be reduced. The average particle diameter of the inorganic particles is preferably 0.01 $\mu$m to 5 $\mu$m, and more preferably 1/2 or less of the average particle diameter of the flame retardant (R).

In the third layer, the flame retardant (R) can be present in the form of aggregates of particles of the flame retardant (R) aggregated together, or in the form of aggregates of particles of the flame retardant (R) aggregated together via a binder. The third layer may partially cover the surface of the second layer. The third layer may cover the substantially entire surface of the second layer. The coverage (by area) of the third layer on the surface of the second layer may be 5% or more, 10% or more, or 30% or more, and is preferably 50% or more, for suppressing the rise of battery temperature in the event of abnormality.

Even when the coverage of the third layer on the surface of the second layer is 100%, and the surface of the second layer is completely covered with the third layer, this will not interfere with charge and discharge because the

gaps between the particles in the third layer are sufficiently large as compared to the size of lithium ions, and lithium ions can travel through the gaps. However, in view of suppressing the increase of battery resistance, the coverage of the third layer on the surface of the second layer may be set to 90% or less, or 80% or less.

The coverage of the third layer on the surface of the second layer may be 5% or more and 90% or less, 10% or more and 90% or less, 30% or more and 90% or less, 50% or more and 90% or less, or 50% or more and 80% or less.

The coverage of the third layer can be determined by performing an elemental mapping on the electrode surface, using SEM-EDX (Energy Dispersive X-ray spectrometry) or the like. For example, by mapping the flame retardant (R) particles and the positive electrode active material using the elemental mapping, the coverage of the third layer on the surface of the second layer can be calculated.

The average particle diameter of the flame retardant (R) particles in the third layer (when in the form of aggregates, the average particle diameter of the primary particles forming an aggregate) may be 0.01 μm to 5 μm, and may be 0.05 μm to 3 μm. The average particle diameter of the flame retardant (R) can be determined as follows. First, 20 flame retardant (R) particles are randomly selected from a SEM image of the positive electrode surface. Next, the grain boundaries of the selected 20 particles are observed, to define the outer contour of the particles, and measure the major diameter of each of the 20 particles. An average of the measured values is calculated as the average particle diameter of the flame retardant (R) particles. When the third layer contains particles other than the flame retardant (R), the average particle diameter of the other particles can also be determined in a similar manner to the above.

The thickness of the third layer is preferably 0.1 μm or more, more preferably 1 μm or more or 3 μm or more, for suppressing the rise of battery temperature in the event of abnormality. The thickness of the third layer is preferably 10 μm or less, for suppressing the increase of battery resistance. These lower and upper limits can be combined in any combination as long as no contradiction arises. The thickness of the third layer is an average thickness in the region where the surface of the second layer is covered with the third layer, and can be determined from the SEM image of a cross section of the positive electrode.

The third layer can be formed by depositing a mixture containing at least flame retardant (R) particles and a binder, on the surface of the second layer. The mixture may be a slurry containing flame retardant (R) particles, a binder, and a solvent (dispersion medium). The third layer can be formed by spraying, dropping, or applying the slurry onto the surface of the second layer, followed by drying. The coverage and the thickness of the third layer can be controlled by adjusting the amount of the solvent relative to the amount of the flame retardant (R) particles in the slurry and/or the applied amount of the slurry.

In the third layer, the content of the flame retardant (R) in the whole third layer may be 50 mass% or more, 60 mass% or more, 70 mass% or more, 80 mass% or more, or 90 mass% or more. The content of the flame retardant (R) in the whole third layer may be 100 mass% or less, or 95 mass% or less. These lower and upper limits can be combined in any combination as long as no contradiction arises. The proportion of the flame retardant (R) in the third layer can be determined by an elemental analysis, such as EDS, performed on a cross section of the third layer.

When the second layer contains the flame retardant (R), in the second layer, the content of the flame retardant (R) in the whole second layer may be 0.1 mass% or more, 0.3 mass% or more, or 0.5 mass% or more. The content of the flame retardant (R) in the whole second layer may be 5 mass% or less, 3 mass% or less, 2 mass% or less, 1 mass% or less, or 0.5 mass% or less. These lower and upper limits can be combined in any combination as long as no contradiction arises. The proportion of the flame retardant (R) in the second layer can be determined by an elemental analysis, such as EDS, performed on a cross section of the second layer.

For achieving a higher capacity, the loaded amount (applied amount) per unit area of the positive electrode active material layer provided on a surface of a positive electrode current collector may be 250 g/m$^2$ or more.

In the following, an example of the secondary battery (S) according to the present embodiment and examples of its constituent elements will be described. Note that, for the constituent elements that are not characteristic of the present disclosure, known constituent elements may be adopted. The secondary battery (S) includes, for example, an outer body (battery case), and a positive electrode, a negative electrode, a non-aqueous electrolyte, and a separator placed in the outer body. The separator is disposed between the positive electrode and the negative electrode.

The shape of the secondary battery (S) is not limited, and may be cylindrical, prismatic, coin-shaped, button-shaped, or the like. The battery case is selected depending on the shape of the secondary battery (S).

[Positive electrode]

The positive electrode includes a first layer containing a positive electrode active material, and, if necessary, further includes a positive electrode current collector. Typically, the positive electrode includes a positive current collector and a first layer disposed on a surface of the positive current collector. The first layer may be a positive electrode active material layer (positive electrode mixture layer). In that case, the first layer contains a positive electrode active material, a flame retardant (R), and, if necessary, other substances (e.g., conductive material, binder, thickener). For the other substances (e.g., conductive material, binder, thickener), known substances may be used. The first layer preferably

contains carbon nanotubes as a conductive material.

The first layer may have a stacked structure including a second layer (positive electrode active material layer) containing at least a positive electrode active material and carbon nanotubes, and a third layer (flame retardant layer) containing at least a flame retardant (R). In that case, the third layer is disposed on the surface of the second layer not facing the positive electrode current collector. The second layer contains a positive electrode active material, carbon nanotubes, and, if necessary, other components. Examples of the other components include a conductive material, a binder, and a thickener. For those other components, known components used for secondary batteries may be used.

As another example, the first layer may have a stacked structure including a second layer containing at least a positive electrode active material and a flame retardant (R), and a third layer containing at least a positive electrode active material and a flame retardant (R). The third layer is disposed on the surface side of the positive electrode (the side not facing the positive electrode current collector), and the content of the flame retardant (R) in the third layer may be higher than that in the second layer. The second and third layers contain a positive electrode active material, a flame retardant (R), and, if necessary, other substances (e.g., conductive material, binder, thickener). For the other substances (e.g., conductive material, binder, thickener), known substances may be used. In this case, the second and third layers may not contain carbon nanotubes as a conductive material.

Examples of the binders include fluorocarbon resin, polyolefin resin, polyamide resin, polyimide resin, vinyl resin, styrene-butadiene copolymer rubber (SBR), polyacrylic acid and derivatives thereof. Examples of the thickener include carboxymethylcellulose (CMC), and polyvinyl alcohol. For these components, one kind of material may be used singly, or two or more kinds of materials may be used in combination.

When the first layer (or the second layer) contains carbon nanotubes, the first layer (or the second layer) may or may not contain a conductive material other than the carbon nanotubes. The first layer (or third layer) may or may not contain a flame retardant other than the flame retardant (R). However, when their contents are high, the proportion of the positive electrode active material decreases. Therefore, when the first layer (or the second layer) contains carbon nanotubes, the mass of the conductive material other than the carbon nanotubes contained in the first layer (or the second layer) may be 10 times or less (e.g., in the range of 0 to 5 times, 0 to 1 times, or 0 to 0.5 times) as large as the mass of the carbon nanotubes contained in the second layer. Examples of the conductive material other than the carbon nanotubes include acetylene black. The mass of the flame retardant being other than the flame retardant (R) contained in the first layer (or third layer) may be 2 times or less (e.g., in the range of 0 to 1 times, 0 to 0.5 times, or 0 to 0.1 times) as large as the mass of the flame retardant (R) contained in the first layer (or the third layer).

In an exemplary method for producing a positive electrode, first, a positive electrode slurry is prepared by dispersing materials of the first layer in a dispersion medium. The ratio between the positive electrode active material, the flame retardant (R) and the carbon nanotubes in the positive electrode slurry is selected so as to correspond to their ratio in the first layer to be formed. Next, the positive electrode slurry is applied onto a surface of the positive electrode current collector, and dried. The dry applied film may be rolled if necessary. In this way, a positive electrode can be produced. The positive electrode active material layer may be formed only on one surface or on both surfaces of the positive electrode current collector.

When forming a first layer including a second layer and a third layer on a surface of the positive electrode current collector, first, a positive electrode slurry is prepared by dispersing materials of the second layer in a dispersion medium. The ratio of the positive electrode active material to the carbon nanotubes in the positive electrode slurry is selected so as to correspond to their ratio in the second layer to be formed. Next, the positive electrode slurry is applied onto a surface of the positive electrode current collector, and dried. The dry applied film may be rolled if necessary. In this way, the second layer serving as a positive electrode active material layer can be formed on a surface of the positive electrode current collector. The positive electrode active material layer may be formed only on one surface or on both surfaces of the positive electrode current collector. Subsequently, the third layer is formed on the surface of the second layer not facing the positive electrode current collector.

Aflame retardant may be contained in the second layer. The second layer may be a layer of a mixture containing a positive electrode active material and a flame retardant. For the flame retardant contained in the second layer, the compounds mentioned above for the flame retardant (R) may be used, or other known flame retardants other than the flame retardant (R) may be used. The flame retardant contained in the second layer is, like the flame retardant (R), preferably a flame retardant containing a halogen atom. However, as long as it is a flame retardant containing a halogen atom, the flame retardant contained in the second layer may be a compound different from the flame retardant (R) or the same compound. The proportion of the flame retardant (R) in the second layer can be determined by an elemental analysis, such as X-ray fluorescence spectrometry (XRF), performed on a cross section of the second layer.

(Positive electrode active material)

As the positive electrode active material, a lithium-containing composite oxide having a layered structure (e.g., rock-salt type crystal structure) containing lithium and a transition metal can be used. The lithium-containing composite

oxide may be, for example, a lithium-nickel composite oxide represented by $Li_aNi_xM_{1-x}O_2$, where $0 < a \leq 1.2$, $0.8 \leq x < 1$, and M includes at least one selected from the group consisting of Co, Al, Mn, Fe, Ti, Sr, Na, Mg, Ca, Sc, Y, Cu, Zn, Cr, and B. In particular, M preferably includes at least one selected from the group consisting of Co, Mn, and Fe. In view of the stability of the crystal structure, Al may be contained as the element represented by M. Note that the value a representing the molar ratio of lithium increases and decreases associated with charge and discharge. Specific examples of such a composite oxide include a lithium-nickel-cobalt-aluminum composite oxide (e.g., $LiNi_{0.9}Co_{0.05}Al_{0.05}O_2$).

In the above lithium-nickel composite oxide, the higher the Ni ratio x is, the more the lithium ions can be extracted from the lithium-nickel composite oxide during charge, and the more the capacity can be increased. However, the Ni in the lithium-nickel composite oxide with the capacity increased in this way has a tendency that its valence increases. As a result, the crystal structure tends to be unstable especially in a fully charged state, and the crystal structure is likely to change (be inactivated) into a crystal structure that is difficult to reversibly absorb and release lithium ions during repeated charge and discharge. As a result, the cycle characteristics tend to deteriorate. Especially when increasing the thickness of the positive electrode active material and/or adopting a configuration in which the positive electrode active material layer is compressed so that the amount of the positive electrode active material per unit area is increased, the flow of lithium ions and/or electrons tends to be inhibited during the charge-discharge reaction, tending to cause non-uniformity in the charge-discharge reaction. If non-uniformity occurs in the charge-discharge reaction, the inactivation of the crystal structure may proceed partially in a region where the charge reaction has proceeded excessively and from which a large amount of lithium ions have been extracted, and as a result, the cycle characteristics may deteriorate in some cases.

However, since the positive electrode active material layer of the secondary battery (S) contains carbon nanotubes, the occurrence of non-uniformity in the charge-discharge reaction is suppressed even though the loaded amount (applied amount) per unit area of the positive electrode active material layer is increased. Therefore, even with a lithium-containing composite oxide having a large Ni ratio x, the deterioration in cycle characteristics is suppressed. Thus, a secondary battery with excellent cycle characteristics and high energy density can be realized.

In view of obtaining a high capacity, the Ni ratio x in the lithium-containing composite oxide may be 0.85 or more ($x \geq 0.85$) or 0.9 or more ($x \geq 0.9$).

The form and the thickness of the positive electrode current collector may be respectively selected from the forms and the ranges corresponding to those of the negative electrode current collector. The positive electrode current collector may be made of, for example, stainless steel, aluminum, an aluminum alloy, or titanium.

Another aspect of the present disclosure relates to a positive electrode having a first layer including the above flame retardant, the above carbon nanotubes, and a positive electrode active material.

[Negative electrode]

The negative electrode includes a negative electrode active material layer, and, if necessary, further includes a negative electrode current collector. The negative electrode active material layer contains a negative electrode active material, and, if necessary, further contains other substances (e.g., binder). In one exemplary method for producing a negative electrode, first, a negative electrode slurry is prepared by dispersing materials for a negative electrode active material layer in a dispersion medium. Next, the negative electrode slurry is applied onto a surface of the negative electrode current collector, and dried. The dry applied film may be rolled if necessary. Examples of the dispersion media include water, alcohols, ethers, N-methyl-2-pyrrolidone (NMP), and mixed solvents thereof. The contents of the components in the negative electrode active material layer can be adjusted by changing the mixing ratio of the materials of the negative electrode active material. In this way, a negative electrode can be produced. The negative electrode active material layer may be formed only on one surface or on both surfaces of the negative electrode current collector.

The negative electrode active material layer contains the negative electrode active material, as an essential component, and may contain a binder, a conductive material, a thickener, and the like, as optional components. As the binder, the conductive material, and the thickener, known materials can be used.

(Negative electrode active material)

For the negative electrode active material, at least one kind selected from a material that electrochemically absorbs and releases lithium ions, lithium metal, and a lithium alloy can be used. As the material that electrochemically absorbs and releases lithium ions, a carbon material, an alloy-type material, and the like are used. Examples of the carbon material include graphite, graphitizable carbon (soft carbon), and non-graphitizable carbon (hard carbon). Preferred among them is graphite, which is excellent in stability during charge and discharge and whose irreversible capacity is small. The alloy-type material may be a material containing at least one metal capable of forming an alloy with lithium, examples of which include silicon, tin, a silicon alloy, a tin alloy, and a silicon compound. These materials combined with oxygen, such as a silicon oxide and a tin oxide, may also be used.

The alloy-type material containing silicon may be, for example, a silicon composite material including a lithium ion conductive phase and silicon particles dispersed in the lithium ion conductive phase. As the lithium ion conductive phase, for example, a silicon oxide phase, a silicate phase, and/or a carbon phase can be used. The major component (e.g., 95 to 100 mass%) of the silicon oxide phase can be a silicon dioxide. In particular, a composite material constituted of a silicate phase and silicon particles dispersed in the silicate phase is preferable because of its high capacity and low irreversible capacity.

The silicate phase may contain, for example, at least one selected from the group consisting of Group I elements and Group II elements in the long-form periodic table. Examples of the Group I and II elements in the long-form periodic table that can be used include lithium (Li), potassium (K), sodium (Na), magnesium (Mg), calcium (Ca), strontium (Sr), and barium (Ba). Other elements, such as aluminum (Al), boron (B), lanthanum (La), phosphorus (P), zirconium (Zr), and titanium (Ti), may be contained. In particular, a silicate phase containing lithium (hereinafter sometimes referred to as a lithium silicate phase) is preferable because of its small irreversible capacity and high initial charge-discharge efficiency.

The lithium silicate phase is an oxide phase containing lithium (Li), silicon (Si), and oxygen (O), and may contain other elements. The atomic ratio O/Si of Oto Si in the lithium silicate phase is, for example, greater than 2 and less than 4. Preferably, the O/Si is greater than 2 and less than 3. The atomic ratio Li/Si of Li to Si in the lithium silicate phase is, for example, greater than 0 and less than 4. The lithium silicate phase can have a composition represented by a formula: $Li_{2z}SiO_{2+z}$ where $0 < z < 2$. The z preferably satisfies $0 < z < 1$, more preferably $z = 1/2$. Examples of the elements other than Li, Si and O that can be contained in the lithium silicate phase include iron (Fe), chromium (Cr), nickel (Ni), manganese (Mn), copper (Cu), molybdenum (Mo), zinc (Zn), and aluminum (Al).

The carbon phase can be composed of, for example, shapeless carbon with low crystallinity (i.e., amorphous carbon). The amorphous carbon may be, for example, a hard carbon, a soft carbon, or others.

As the negative electrode current collector, a non-porous electrically conductive substrate (e.g., metal foil), a porous electrically conductive substrate (e.g., mesh, net, punched sheet), and the like can be used. The negative electrode current collector may be made of, for example, stainless steel, nickel, a nickel alloy, copper, or a copper alloy.

[Electrolyte]

As the electrolyte, a liquid electrolyte containing a solvent and a solute dissolved in the solvent can be used. The solute is an electrolyte salt that ionically dissociates in the liquid electrolyte. The solute can include, for example, a lithium salt. The components of the liquid electrolyte other than the solvent and the solutes are additives. The liquid electrolyte can contain various additives.

The solvent may be a non-aqueous solvent. As the non-aqueous solvent, for example, a cyclic carbonic acid ester, a chain carbonic acid ester, a cyclic carboxylic acid ester, a chain carboxylic acid ester, and the like can be used. Examples of the cyclic carbonic acid ester include propylene carbonate (PC), ethylene carbonate (EC), and vinylene carbonate (VC). Examples of the chain carbonic acid ester include diethyl carbonate (DEC), ethyl methyl carbonate (EMC), and dimethyl carbonate (DMC). Examples of the cyclic carboxylic acid ester include $\gamma$-butyrolactone (GBL) and $\gamma$-valerolactone (GVL). Examples of the chain carboxylic acid ester include methyl acetate, ethyl acetate, propyl acetate, methyl propionate (MP), and ethyl propionate (EP). The non-aqueous solvent may be used singly or in combination of two or more kinds.

Other examples of the non-aqueous solvent that can be used include cyclic ethers, chain ethers, nitriles such as acetonitrile, and amides such as dimethylformamide.

Examples of the cyclic ether include 1,3-dioxolane, 4-methyl-1,3-dioxolane, tetrahydrofuran, 2-methyltetrahydrofuran, propylene oxide, 1,2-butylene oxide, 1,3-dioxane, 1,4-dioxane, 1,3,5-trioxane, furan, 2-methylfuran, 1,8-cineol, and crown ether.

Examples of the chain ether include 1,2-dimethoxyethane, dimethyl ether, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxytoluene, benzyl ethyl ether, diphenyl ether, dibenzyl ether, o-dimethoxybenzene, 1,2-diethoxyethane, 1,2-dibutoxyethane, diethylene glycol dimethyl ether, diethylene glycol diethyl ether, diethylene glycol dibutyl ether, 1,1-dimethoxymethane, 1,1-diethoxyethane, triethylene glycol dimethyl ether, and tetraethylene glycol dimethyl ether.

These solvents may be a fluorinated solvent in which one or more hydrogen atoms are substituted by fluorine atom. As the fluorinated solvent, fluoroethylene carbonate (FEC) may be used.

Examples of the lithium salt include a lithium salt of a chlorine-containing acid (e.g., $LiClO_4$, $LiAlCl_4$, $LiB_{10}Cl_{10}$), a lithium salt of a fluorine-containing acid (e.g., $LiPF_6$, $LiPF_2O_2$, $LiBF_4$, $LiSbF_6$, $LiAsF_6$, $LiCF_3SO_3$, $LiCF_3CO_2$), a lithium salt of a fluorine-containing acid imide (e.g., $LiN(FSO_2)_2$, $LiN(CF_3SO_2)_2$, $LiN(CF_3SO_2)(C_4F_9SO_2)$, $LiN(C_2F_5SO_2)_2$), and a lithium halide (e.g., LiCl, LiBr, LiI). The lithium salt may be used singly or in combination of two or more kinds.

The concentration of the lithium salt in the liquid electrolyte may be 1 mol/liter or more and 2 mol/liter or less,

and may be 1 mol/liter or more and 1.5 mol/liter or less. When the concentration of the lithium salt is controlled within the above range, a liquid electrolyte having excellent ionic conductivity and moderate viscosity can be obtained. The concentration of the lithium salt, however, is not limited to the above.

The liquid electrolyte may contain one or more known additives. Examples of the additive include 1,3-propanesultone, methylbenzene sulfonate, cyclohexylbenzene, biphenyl, diphenyl ether, and fluorobenzene.

[Separator]

A separator may be disposed between the positive electrode and the negative electrode. For the separator, a member which is excellent in ion permeability and has moderate mechanical strength and electrically insulating properties can be adopted. As the separator, a microporous thin film, a woven fabric, a nonwoven fabric, and the like can be used. The separator is preferably made of, for example, polyolefin, such as polypropylene or polyethylene. In order to increase the mechanical strength, aramid fibers and the like may be used.

An example of the secondary battery (S) includes an outer body, and an electrode group and a non-aqueous electrolyte housed in the outer body. The structure of the electrode group is not limited. An example of the electrode group is formed by winding a positive electrode, a negative electrode, and a separator, with the separator positioned between the positive electrode and the negative electrode. Another example of the electrode group is formed by stacking a positive electrode, a negative electrode, and a separator, with the separator positioned between the positive electrode and the negative electrode. The secondary battery (S) may be of any type, such as cylindrical, prismatic, coin, button, and laminate types.

An example of the secondary battery (S) includes an outer body, and an electrode group and a non-aqueous electrolyte housed in the outer body. The structure of the electrode group is not limited. An example of the electrode group is formed by winding a positive electrode, a negative electrode, and a separator, with the separator positioned between the positive electrode and the negative electrode. Another example of the electrode group is formed by stacking a positive electrode, a negative electrode, and a separator, with the separator positioned between the positive electrode and the negative electrode. The secondary battery (S) may be of any type, such as cylindrical, prismatic, coin, button, and laminate types.

The manufacturing method of the secondary battery (S) is not limited, and a known manufacturing method may be adopted, or a known manufacturing method may be at least partially modified and adopted.

An exemplary embodiment according to the present disclosure will be specifically described below with reference to the drawings. The above-described constituent elements can be used as constituent elements of the example described below. The example described below can be modified based on the above descriptions. The matters described below may be applied to the above-described embodiment. In the embodiment described below, constituent elements that are not essential to the secondary battery according to the present disclosure may be omitted.

FIG. 1 is a partially cut-away schematic oblique view of a prismatic non-aqueous electrolyte secondary battery according to an embodiment of the present disclosure. The secondary battery 1 illustrated in FIG. 1 includes a bottomed prismatic battery case 11, and an electrode group 10 and a non-aqueous electrolyte (not shown) housed in the battery case 11. The electrode group 10 has a long negative electrode, a long positive electrode, and a separator interposed therebetween and preventing them from directly contacting with each other. The electrode group 10 is formed by winding the negative electrode, the positive electrode, and the separator around a flat plate-like winding core, and then removing the winding core. As described above, the positive electrode includes a first layer according to the present disclosure. The first layer contains a positive electrode active material, a flame retardant (R), and carbon nanotubes.

To the negative electrode current collector of the negative electrode, a negative electrode lead 15 is attached at its one end, by means of welding or the like. To the positive electrode current collector of the positive electrode, a positive electrode lead 14 is attached at its one end, by means of welding or the like. The negative electrode lead 15 is electrically connected at its other end to a negative electrode terminal 13 provided at a sealing plate 12. A gasket 16 is disposed between the sealing plate 12 and the negative electrode terminal 13, providing electrical insulation therebetween. The positive electrode lead 14 is connected at its other end to the sealing plate 12, and electrically connected to the battery case 11 serving as a positive electrode terminal. On top of the electrode group 10, a resin frame 18 is disposed. The frame 18 separates the electrode group 10 from the sealing plate 12 and separates the negative electrode lead 15 from the battery case 11. The opening of the battery case 11 is sealed with the sealing plate 12. A liquid injection hole 17a is formed in the sealing plate 12. The electrolyte is injected into the battery case 11 through the liquid injection hole 17a. Thereafter, the liquid injection hole 17a is closed with a sealing plug 17.

FIG. 2 is a cross-sectional view showing an exemplary configuration of a positive electrode 3 that constitutes a secondary battery according to one embodiment of the present disclosure. A positive electrode active material layer (second layer) 31 is disposed on a surface of a positive electrode current collector 30, and a flame retardant layer (third layer) 32 is disposed on the surface of the positive electrode active material layer 31. The flame retardant layer 32 contains a flame retardant (R). The positive electrode active material layer 31 and the flame retardant layer 32 constitute

a first layer. FIG. 2 shows an example in which the flame retardant layer 32 is formed so as to cover the entire surface of the positive electrode active material layer 31.

[Examples]

The secondary battery according to the present disclosure will be more specifically described below by way of Examples.

(Example 1)

In Example 1, a plurality of secondary batteries were produced and evaluated. The secondary batteries were each produced in the following manner.

[Preparation of negative electrode]

As a negative electrode active material, a mixture of a silicon composite material and graphite mixed in a mass ratio of silicon composite material: graphite = 5 : 95 was used. The negative electrode active material, carboxymethylcellulose sodium (CMC-Na), styrene-butadiene rubber (SBR), and water were mixed in a predetermined mass ratio, to prepare a negative electrode slurry. Next, the negative electrode slurry was applied onto a surface of a copper foil (negative electrode current collector), to form an applied film. The applied film was dried, and then rolled, to form a negative electrode active material layer on both sides of the copper foil.

[Preparation of positive electrode]

As a positive electrode active material, $LiNi_{0.88}Co_{0.09}Al_{0.03}O_2$ was used. A positive electrode slurry was prepared by mixing the positive electrode active material, polyvinylidene fluoride, N-methyl-2-pyrrolidone (NMP), and, if necessary, a flame retardant, acetylene black, and carbon nanotubes (CNTs), in a predetermined mass ratio. The carbon nanotubes used here were of about 1.5 nm in average diameter and about 1 $\mu$m to 5 $\mu$m in length.

Next, the positive electrode slurry was applied onto a surface of an aluminum foil (positive electrode current collector), to form an applied film. The applied film was dried, and then rolled, to form a first layer on both sides of the aluminum foil.

[Preparation of liquid electrolyte]

A liquid electrolyte was prepared by adding $LiPF_6$ as a lithium salt, to a mixed solvent containing ethylene carbonate (EC) and ethyl methyl carbonate (EMC) in a volume ratio of 3:7. The concentration of $LiPF_6$ in the liquid non-aqueous electrolyte was set to 1.0 mol/liter.

[Production of secondary battery]

A lead tab was attached to each electrode. Next, the positive electrode and the negative electrode were spirally wound with a separator interposed therebetween, such that the lead was positioned at the outermost layer, to prepare an electrode group. Next, the electrode group was inserted into an outer body made of a laminated film having an aluminum foil as a barrier layer, and dried under vacuum. Next, the liquid electrolyte was injected into the outer body, and the opening of the outer body was sealed. In this way, a secondary battery was obtained.

In the present Examples, a plurality of secondary batteries (batteries A1 to A8, and C1 to C3) were produced, with different kinds of flame retardants used in the first layer and different contents of the materials in the first layer. Specifically, the contents of the positive electrode active material, the flame retardant, the acetylene black, and the carbon nanotubes in the positive electrode active material layer were changed. Their contents were changed by changing their mixing ratio when preparing a positive electrode slurry. Those contents are shown in Table 1 below. The flame retardant used here was ethylene-1,2-bispentabromophenyl, or ethylenebistetrabromophthalimide.

The first layer of each battery was formed to have the same thickness as each other. Therefore, when the proportion of the flame retardant and the conductive material in the first layer is increased, the amount of the positive electrode active material contained in the first layer is reduced, and as a result, the capacity decreases.

The following evaluations were performed on the produced secondary batteries.

(1) Measurement of initial discharge capacity and capacity retention rate

The discharge capacity of each of the produced secondary batteries was measured as follows. First, in a 25 °C environment, the battery was charged at a constant current of 40 mA until the battery voltage reached 4.2 V, and then, charged continuously at a constant voltage until the current value reached 10 mA. The charged battery was left to stand for 20 minutes, and then, discharged at a constant current of 60 mA until the battery voltage reached 2.5 V. Then, the battery was left to stand for 20 minutes. This operation (charge-discharge cycle) was repeated 100 times in total.
The discharge capacity DC0 at the initial discharge and the discharge capacity DC1 after the above charge-discharge cycle was repeated 100 times were measured. Then, the capacity retention rate was calculated from the following formula.

$$\text{Capacity retention rate (\%)} = 100 \cdot DC1/DC0$$

(2) Nail penetration test

A nail penetration test was performed on each of the produced secondary batteries as follows.

(a) In a 25 °C environment, the battery was charged at a constant current of 60 mA until the battery voltage reached 4.2 V, and then, charged continuously at a constant voltage until the current value reached 10 mA.
(b) In a 25 °C environment, the tip of a round nail (diameter: 2.7 mm) was brought into contact with the center portion of the battery charged in (a). Then, the round nail was driven into the battery in the stacking direction of the electrode plate group. The round nail was driven at a speed of 1 mm/sec. The round nail was stopped immediately when a drop in battery voltage due to an internal short circuit was detected.
(c) For one second after the battery was short-circuited by the round nail, the current value I of the short-circuit current and the voltage V of the battery were continued to be measured. Then, the product of the current value I and the voltage V (electric power) was integrated overtime, to calculate an amount of heat generated for one second.

Some of the production conditions and the evaluation results of the batteries are shown in Table 1. The amounts a, b, and c in Table 1 are the values when the mass ratio between the positive electrode active material, the flame retardant, the acetylene black (AB) and the carbon nanotubes (CNTs) in the first layer is expressed as the positive electrode active material: the flame retardant: the AB : the CNTs = 100 : a : b : c.

(*1) In Tables 1 and 2, flame retardant R1 represents ethylene-1,2-bispentabromophenyl.
(*2) In Tables 1 and 2, flame retardant R2 represents ethylenebistetrabromophthalimide.

[Table 1]

| Battery | Flame retardant | | Amount b of AB | Amount c of CNTs | b+c | Initial discharge capacity (mAh) | Heat generation amount (J) | Capacity retention rate (%) |
|---|---|---|---|---|---|---|---|---|
| | Kind | Amount a | | | | | | |
| A1 | R1 (*1) | 0.5 | 0 | 0.5 | 0.5 | 61.6 | 40.5 | 94.6 |
| A2 | | 1.0 | 0 | 0.5 | 0.5 | 61.1 | 13.7 | 95.2 |
| A3 | | 0.5 | 0.5 | 0.1 | 0.6 | 60.9 | 44.4 | 93.8 |
| A4 | | 1.0 | 0.5 | 0.1 | 0.6 | 60.4 | 13.8 | 94.7 |
| A5 | R2 (*2) | 0.5 | 0 | 0.5 | 0.5 | 61.5 | 43.2 | 94.2 |
| A6 | | 1.0 | 0 | 0.5 | 0.5 | 61.3 | 21.9 | 94.9 |
| A7 | | 0.5 | 0.5 | 0.1 | 0.6 | 60.7 | 45.9 | 93.7 |
| A8 | | 1.0 | 0.5 | 0.1 | 0.6 | 60.5 | 22.3 | 94.4 |
| C1 | Without | 0 | 1.0 | 0 | 1.0 | 59.9 | 97.3 | 93.1 |
| C2 | R1 | 1.0 | 1.0 | 0 | 1.0 | 59.1 | 16.5 | 94.3 |
| C3 | Without | 0 | 0 | 0.5 | 0.5 | 61.8 | 83.4 | 94.1 |

Regarding the initial discharge capacity and the capacity retention rate in Table 1, a higher value is more preferable, and regarding the heat generation amount, a lower value is more preferable. As shown in Table 1, the positive electrode active material layer (first layer) of the batteries A1 to A8 contains a flame retardant (R) and carbon nanotubes. On the other hand, the positive electrode active material layer (first layer) of the batteries C1 to C3 does not contain at least one of a flame retardant (R) and carbon nanotubes. In the batteries A1 to A8, as compared to in the battery C1, initial discharge capacity was high, and the heat generation amount was small. Comparasion among the batteries A2, A4, and C2 where the kind and the amount of the flame retardant (R) are same shows, that in the batteries A2 and A4, as compared to in the battery C2, the initial discharge capacity was high, and the heat generation amount was small. As shown above, according to the present embodiment, a battery that can achieve both a higher capacity and a high level of safety can be obtained.

The positive electrode active material layer (first layer) of the battery A2 has a configuration in which the acetylene black in the positive electrode active material layer (first layer) of the battery A4 is replaced with carbon nanotubes. The heat generation amount in the battery A2 was lower than that in the battery A4. Likewise, the positive electrode active material layer (first layer) of the battery A6 has a configuration in which the acetylene black in the positive electrode active material layer (first layer) of the battery A8 is replaced with carbon nanotubes. The heat generation amount in the battery A6 was lower than that in the battery A8. The carbon nanotubes are arranged in a network-like form on the surface of the positive electrode active material. The battery A2 contains more carbon nanotubes than the battery A4. From the above results, it can be seen that in the battery A2, the carbon nanotubes have formed an electrical conduction network which is arranged more comprehensively on the surface of the positive electrode active material than in the battery A4, and thus, in the battery A2, the flame retardant has been uniformly distributed along with the comprehensive arrangement of the carbon nanotubes. It can be seen that the more uniform distribution of the flame retardant resulted in a smaller heat generation amount in the battery A2 than in the battery A4. The heat generation amount of the battery A6 lower than that of the battery A8 is also presumably resulted from the uniform distribution of the flame retardant along with the comprehensive distribution of the carbon nanotubes on the surface of the positive electrode active material.

Furthermore, the capacity retention rates in the batteries A1 to A8 were equivalent to or higher than those in the batteries C1 to C3. Carbon nanotubes have a large aspect ratio and excellent electrical conductivity. By allowing such carbon nanotubes to be present between particles of the positive electrode active material, the variations in potential between the particles of the positive electrode active material are reduced, and the non-uniformity of the charge-discharge reaction is suppressed. Furthermore, the carbon nanotubes having a large aspect ratio occupy a very small volume in the positive electrode active material layer. Therefore, the carbon nanotube are unlikely to lower the permeability of the liquid electrolyte. In addition, the carbon nanotubes are fibrous. Therefore, even when the positive electrode active material is densely packed in the positive electrode active material layer, the gaps for the liquid electrolyte are ensured. Presumably for the reasons above, the capacity retention rate is improved by the addition of carbon nanotubes.

On the other hand, comparison of the batteries A1, A2, A5, A6 with the battery C3 show that, despite of the same amount of carbon nanotubes, the capacity retention ratios in batteries A1, A2, A5, and A6 were higher than that in the battery C3. The reason for this is unclear, but this may be a result of a synergistic effect produced by the addition of both the flame retardant (R) and the carbon nanotubes. The flame retardant (R) containing a halogen atom is a low dielectric constant material and excellent in wettability with components of the liquid electrolyte (e.g., chain carbonate). It can be seen therefore that the addition of the flame retardant (R) improves the permeability of the liquid electrolyte. The improvement in the permeability of the liquid electrolyte is presumably one of the factors that enable the improvement in the capacity retention rate.

Furthermore, the flame retardant (R) and carbon nanotubes are both poor in dispersibility. When one of them is added alone to the positive electrode slurry, the uniformity of the positive electrode active material layer tends to be reduced. On the other hand, when both of them are added to the positive electrode slurry, although the reason therefor is unclear, they are readily dispersed in some cases. Therefore, when both of them are used, the time required for preparing the positive electrode slurry can be shortened, and a positive electrode active material layer with excellent uniformity can be easily produced. One of the reasons for the batteries A1 to A8 to exhibit favorable characteristics may reside in the improvement in the uniformity of the positive electrode active material layer (first layer) achieved by using both the flame retardant (R) and carbon nanotubes. For example, the dispersibility of the flame retardant (R) may have been improved by using the both, and this may have led to excellent flame retardant effect.

(Example 2)

In Example 2, a plurality of secondary batteries were produced and evaluated. In Example 2, except for increasing the amount of the flame retardant, a plurality of secondary batteries were produced under the same conditions and in the same manner as the batteries of Example 1. With respect to the produced batteries, a nail penetration test was performed in the manner as described above. Some of the production conditions and the heat generation amounts

in the nail penetration test are shown in Table 2.

[Table 2]

| Battery | Flame retardant | | Amount b of AB | Amount c of CNTs | b+c | Heat generation amount (J) |
|---|---|---|---|---|---|---|
| | Kind | Amount a | | | | |
| B1 | R1 (*1) | 2.0 | 0 | 0.5 | 0.5 | 12.6 |
| B2 | | 2.0 | 0.5 | 0.1 | 0.6 | 12.9 |
| B3 | R2 (*2) | 2.0 | 0 | 0.5 | 0.5 | 15.9 |
| B4 | | 2.0 | 0.5 | 0.1 | 0.6 | 16.1 |

As shown by the results in Tables 1 and 2, the larger the amount of the flame retardant was, the smaller the heat generation amount was. On the other hand, when the amount of the flame retardant is large, the initial discharge capacity and the capacity retention rate are reduced in some cases.

(Example 3)

In the production of a positive electrode, $LiNi_{0.88}Co_{0.09}Al_{0.03}O_2$ was used as the positive electrode active material, and a positive electrode active material slurry was prepared by mixing the positive electrode active material, polyvinylidene fluoride (PVdF), N-methyl-2-pyrrolidone (NMP), acetylene black (AB), and, if necessary, carbon nanotubes (CNTs), in a predetermined mass ratio. The carbon nanotube used here were of about 1.5 nm in average diameter and about 1 μm to 5 μm in length.

Next, the positive electrode slurry was applied onto a surface of an aluminum foil (positive electrode current collector), to form an applied film. The applied film was dried, and then rolled, to form a second layer as a positive electrode active material layer on both sides of the aluminum foil.

Subsequently, a slurry for a third layer was prepared by mixing a flame retardant (R), polyvinylidene fluoride (PVdF), N-methyl-2-pyrrolidone (NMP), and, if necessary, alumina particles ($Al_2O_3$), in a predetermined mass ratio. The resulting slurry was applied onto a surface of the second layer, and dried, to form a third layer serving as a flame retardant layer. In this way, a first layer having the second layer and the third layer was formed on a surface of the positive electrode current collector.

Except for the above, a plurality of secondary batteries were produced in the same manner as in Examples 1 and 2, and the following evaluations were performed.

In the present Examples, a plurality of secondary batteries (batteries A9 to A13, C4, and C5) were produced, with different contents of the materials in the second layer, different kinds of flame retardants contained in the third layer, and different contents of the materials in the third layer. Specifically, the contents of the positive electrode active material, the flame retardant, the acetylene black, and the carbon nanotubes in the second layer were changed. Their contents were changed by changing their mixing ratio when preparing a positive electrode slurry. Also, the contents of the flame retardant (R) and the binder (PVdF) in the third layer were changed by changing their mixing ratio when preparing a slurry for the third layer. Some of those contents are shown in Table 3 below. The kinds of the flame retardants will be described later.

(1) Battery resistance

In a 25 °C environment, the battery was charged at a constant current of 40 mA until the battery voltage reached 4.2 V, and then, charged continuously at a constant voltage until the current value reached 10 mA. The battery after charging was connected to a tester, to measure an internal resistance.

(2) Nail penetration test

With respect to each of the produced secondary batteries, the battery temperature after the nail penetration test was measured as follows.

(a) In a 25 °C environment, the battery was charged at a constant current of 0.5 C until the battery voltage reached 4.2 V, and then, charged continuously at a constant voltage until the current value reached 0.02 C.
(b) In a 25 °C environment, the tip of a round nail (diameter: 2.7 mm) was brought into contact with the center portion

of the battery charged in (a), and the nail was driven into the battery at a speed of 1 mm/sec. The driving of the round nail was stopped immediately when a drop in battery voltage due to an internal short circuit was detected. Then, the surface temperature of the battery was measured one minute after the battery was short-circuited.

Some of the battery production conditions are shown in Table 3, and the evaluation results are shown in Table 4. The content ratio of the flame retardant layer in Table 3 shows the contents of the flame retardant and the binder (PVdF) in the slurry for a flame retardant layer, respectively. In Table 3, flame retardant r1 represents ethylene-1,2-bispentabromophenyl (SAYTEX (registered tradename)-8010, available from Albemarle Japan Cooperation). Flame retardant r2 represents ethylenebistetraphthalimide.

[Table 3]

| Battery | Second layer (Positive electrode active material layer) | Third layer (Flame retardant layer) | | |
|---|---|---|---|---|
| | Content ratio (wt%) Active material/AB/CNT/PVdF | Flame retardant | Content ratio (wt%) Flame retardant/PVdF | Thickness / [μm] |
| A9 | 96/2/1/1 | r1 | 95/5 | 3 |
| A10 | 96/2.9/0.1/1 | r1 | 95/5 | 3 |
| A11 | 96/2/1/1 | r1 | 95/5 | 10 |
| A12 | 96/2/1/1 | r1 | 60/5 | 3 |
| A13 | 96/2/1/1 | r2 | 95/5 | 3 |
| C4 | 94/5/0/1 | - | - | - |
| C5 | 96/2/1/1 | - | - | - |

[Table 4]

| Battery | Battery resistance / [mΩ] | Battery temperature after nail penetration / [°C] |
|---|---|---|
| A9 | 580 | 50 |
| A10 | 590 | 45 |
| A11 | 590 | 40 |
| A12 | 560 | 55 |
| A13 | 575 | 45 |
| C4 | 750 | 110 |
| C5 | 550 | 140 |

Comparison between the batteries C4 and C5 from Tables 3 and 4 show that in the battery C4, in which carbon nanotubes were not added to the second layer serving as the positive electrode active material layer, the battery resistance was high. In contrast, by adding carbon nanotubes to the second layer serving as the positive electrode active material layer, in the battery C5, the battery resistance was reduced, but the battery temperature after the nail penetration test was increased. The battery temperature after the nail penetration test of the battery C5 was significantly higher than that of the battery C4 in which carbon nanotubes were added.

However, in the batteries A9 to A13, in which carbon nanotubes were added to the second layer serving as the positive electrode active material layer, and a third layer containing the above-described flame retardant (R) was provided on the surface of the second layer, the battery resistance was reduced, and the temperature rise after the nail penetration test was suppressed. Table 3 shows that, with a comparatively thin thickness of about 3 μm of the third layer, sufficient effect of suppressing the temperature rise can be obtained.

The battery A12 corresponds to a battery in which the content of the flame retardant (R) was reduced, by replacing part of the flame retardant (R) contained in the third layer of the battery A9 with alumina particles. In this case, it can be seen that the alumina particles functioned as a spacer, increasing the gaps that allowed for lithium ions to travel therethrough, and also, the reduced adding amount of the flame retardant resulted in the suppressed increase of battery

resistance as compared to in the battery A9.

[Industrial Applicability]

The present disclosure can be utilized for a secondary battery.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

[Reference Signs List]

1: secondary battery, 3: positive electrode, 10: electrode group, 11: battery case, 12: sealing plate, 13: negative electrode terminal, 14: positive electrode lead, 15: negative electrode lead, 16: gasket, 17: sealing plug, 17a: liquid injection hole, 18: frame, 30: positive electrode current collector, 31: positive electrode active material layer, 32: flame retardant layer

## Claims

**1.** A secondary battery, comprising:

a positive electrode; and a negative electrode, wherein
the positive electrode includes a first layer containing a positive electrode active material, and
the first layer further contains a flame retardant containing a halogen atom, and a carbon nanotube.

**2.** The secondary battery according to claim 1, wherein

the flame retardant includes a cyclic structure to which the halogen atom is bonded, and
a proportion of the halogen atom in the flame retardant is 45 mass% or more.

**3.** The secondary battery according to claim 1 or 2, wherein the flame retardant releases the halogen atom at a temperature of 180 °C or higher.

**4.** The secondary battery according to claim 1, wherein the flame retardant is at least one selected from the group consisting of ethylene-1,2-bispentabromophenyl, ethylenebistetrabromophthalimide, tetrabromobisphenol A, hexabromocyclododecane, 2,4,6-tribromophenol, 1,6,7,8,9,14,15,16,17,17,18,18-dodecachloropentacyclo(12.2.1.1$^{6,9}$.0$^{2,13}$.0$^{5,10}$)octadeca-7,15-diene, and tris(2,2,2-trifluoroethyl) phosphate.

**5.** The secondary battery according to any one of 1 to 4, wherein, when a mass ratio of the positive electrode active material to the flame retardant in the first layer is expressed as the positive electrode active material: the flame retardant = 100 : a, the a is greater than 0 and less than 7.

**6.** The secondary battery according to any one of claims 1 to 5, wherein

the first layer contains acetylene black, and
when a mass ratio of the positive electrode active material to the acetylene black to the carbon nanotube in the first layer is expressed as the positive electrode active material: the acetylene black : the carbon nanotube = 100 : b : c, the b and the c satisfy $0 \leq b < 3$, and $b+c < 5$.

**7.** The secondary battery according to any one of claims 1 to 6, wherein

the first layer includes a second layer containing at least the positive electrode active material and the carbon nanotube, and a third layer located nearer to a surface of the positive electrode than the second layer and containing at least the flame retardant,
a content of the flame retardant in the third layer is higher than a content of the flame retardant in the second layer.

**8.** The secondary battery according to claim 7, wherein the third layer is disposed on a surface of the second layer.

**9.** The secondary battery according to claim 7 or 8, wherein a content of the carbon nanotube in the second layer is 0.01 mass% or more and 10 mass% or less.

**10.** The secondary battery according to any one of claims 7 to 9, wherein a thickness of the third layer is 0.1 μm or more and 10 μm or less.

**11.** The secondary battery according to any one of claims 7 to 10, wherein a content of the flame retardant in the whole third layer is 50 mass% or more.

**12.** A secondary battery, comprising:

a positive electrode; and a negative electrode, wherein
the positive electrode includes a first layer containing a positive electrode active material, and
the first layer includes a second layer containing at least the positive electrode active material and a flame retardant containing a halogen atom, and a third layer disposed nearer to a surface of the positive electrode than the second layer and containing at least the flame retardant, and
a content of the flame retardant in the third layer is higherthan a content of the flame retardant in the second layer.

**13.** The secondary battery according to claim 12, wherein

the flame retardant includes a cyclic structure to which the halogen atom is bonded, and
a proportion of the halogen atom in the flame retardant is 45 mass% or more.

**14.** The secondary battery according to claim 12 or 13, wherein the flame retardant releases the halogen atom at a temperature of 180 °C or higher.

**15.** The secondary battery according to claim 12, wherein the flame retardant is at least one selected from the group consisting of ethylene-1,2-bispentabromophenyl, ethylenebistetrabromophthalimide, tetrabromobisphenol A, hexabromocyclododecane, 2,4,6-tribromophenol,1,6,7,8,9,14,15,16,17,17,18,18-dodecachloropentacyclo(12.2.1.1$^{6,9}$.0$^{2,13}$.0$^{5,10}$)octadeca-7,15-diene, and tris(2,2,2-trifluoroethyl)phosphate.

**16.** The secondary battery according to any one of 12 to 15, wherein, when a mass ratio of the positive electrode active material and the flame retardant in the first layer is expressed as the positive electrode active material: the flame retardant = 100 : a, the a is greater than 0 and less than 7.

**17.** The secondary battery according to any one of claims 12 to 16, the third layer is disposed on a surface of the second layer.

**18.** The secondary battery according to any one of claims 12 to 17, wherein the third layer has a thickness of 0.1 μm or more and 10 μm or less.

**19.** The secondary battery according to any one of claims 12 to 18, wherein a content of the flame retardant in the whole third layer is 50 mass% or more.

*FIG. 1*

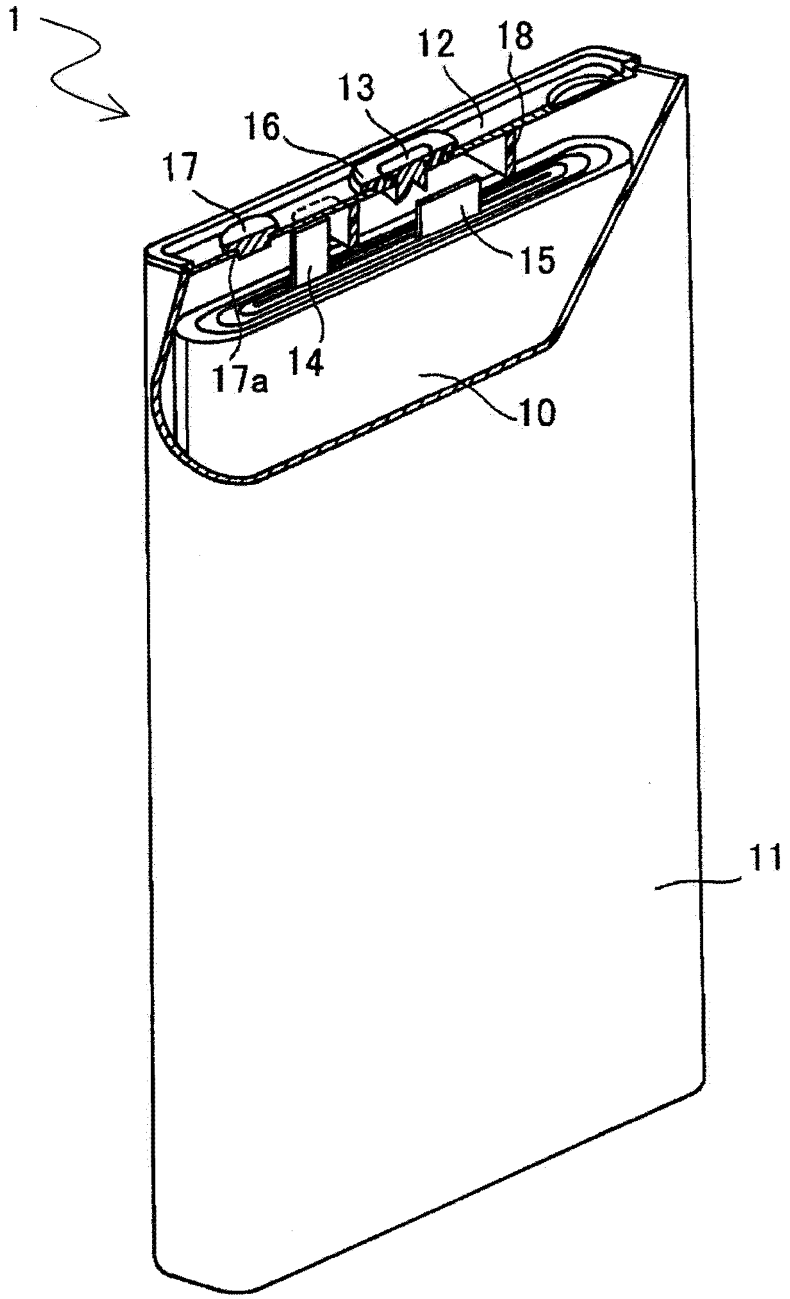

*FIG. 2*

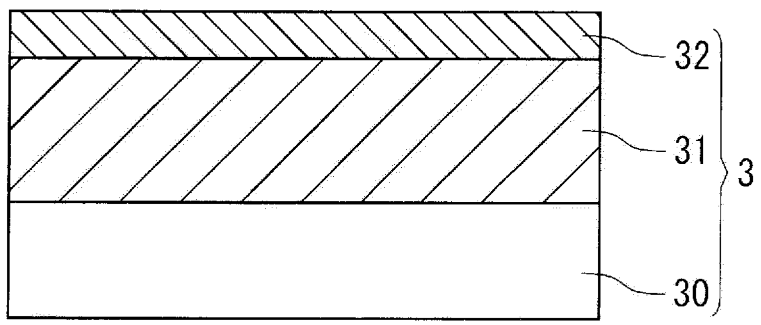

## INTERNATIONAL SEARCH REPORT

International application No.
**PCT/JP2021/031764**

**A. CLASSIFICATION OF SUBJECT MATTER**

***H01M 4/13***(2010.01)i; ***H01M 4/62***(2006.01)i; ***H01M 10/052***(2010.01)i
FI: H01M4/62 Z; H01M10/052; H01M4/13

According to International Patent Classification (IPC) or to both national classification and IPC

**B. FIELDS SEARCHED**

Minimum documentation searched (classification system followed by classification symbols)

H01M4/13; H01M4/62; H01M10/052

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2012-059392 A (NTT FACILITIES, INC.) 22 March 2012 (2012-03-22)<br>claims, paragraphs [0017]-[0019] | 1, 5-12, 16-19<br>2-4, 13-15 |
| Y | CN 108987793 A (SOUNDON NEW ENERGY TECHNOLOGY CO., LTD.) 11 December 2018 (2018-12-11)<br>paragraphs [0006], [0007], [0010] | 1-6 |
| Y | US 2003/0134203 A1 (FAN JIANG) 17 July 2003 (2003-07-17)<br>paragraphs [0051], [0054] | 1-6, 13-15 |
| Y | JP 2014-011095 A (SHIN-KOBE ELECTRIC MACHINERY CO., LTD.) 20 January 2014 (2014-01-20)<br>paragraph [0017] | 1-6, 13-15 |
| Y | JP 10-046015 A (TEIJIN CHEMICALS LTD.) 17 February 1998 (1998-02-17)<br>paragraph [0013] | 1-6, 13-15 |
| A | CN 108736013 A (SOUND GROUP CO., LTD.) 02 November 2018 (2018-11-02)<br>paragraphs [0043]-[0054] | 1-19 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **26 October 2021** | **09 November 2021** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2021/031764**

| Patent document cited in search report | Publication date (day/month/year) | Patent family member(s) | Publication date (day/month/year) |
|---|---|---|---|
| JP 2012-059392 A | 22 March 2012 | US 2013/0216908 A1<br>claims, paragraphs [0017]-[0019]<br>WO 2012/033045 A1<br>EP 2615667 A1<br>CN 103081182 A<br>KR 10-2014-0012020 A | |
| CN 108987793 A | 11 December 2018 | (Family: none) | |
| US 2003/0134203 A1 | 17 July 2003 | (Family: none) | |
| JP 2014-011095 A | 20 January 2014 | (Family: none) | |
| JP 10-046015 A | 17 February 1998 | (Family: none) | |
| CN 108736013 A | 02 November 2018 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2010212228 A
- JP 2017534138 A